# EUROPÄISCHE PATENTANMELDUNG

(11) **EP 0 665 334 A2**
(43) Veröffentlichungstag der Anmeldung: **02.08.1995**
(21) Anmeldenummer: 95101149.3
(22) Anmeldetag: 27.01.1995
(51) Int. Cl.: E01C 23/088, E02F 3/18, E02F 3/36, E02F 3/96, B28D 1/18, B23Q 9/00

(54) **Fräsmaschine und Gelenk**

(30) Priorität: 31.01.1994 DE 9401538 U
(71) Anmelder: Humme, Thomas, D-52385 Nideggen (DE)
(72) Erfinder: Humme, Thomas, D-52385 Nideggen (DE)
(74) Vertreter: Borchert, Uwe Rudolf, Dipl.-Ing.

(57) **Zusammenfassung**

Die Erfindung betrifft eine Fräsmaschine (10), die zum Abfräsen von Oberflächenbelägen, insbesondere Asphalt, durch eine Zug- und/oder Schubmaschine (12) über den abzufräsenden Oberflächenbelag (B) verfahren wird, mit einem Anschlußteil (26) für die Zug- und/oder Schubmaschine (12), einer Gelenkanordnung mit einem ersten Gelenk (30), das eine Drehbewegung der Fräsmaschine (10) relativ zu ihrem Anschlußteil (26) um eine im wesentlichen horizontal ausgerichtete und zu ihrer Längsachse parallele Achse ermöglicht. Erfindungsgemäß weist die Gelenkanordnung ein zweites Gelenk (28) auf, das eine Drehbewegung der Fräsmaschine (10) relativ zu ihrem Anschlußteil (26) im wesentlichen um eine vertikale Achse ermöglicht.

## Beschreibung

Die Erfindung betrifft eine Fräsmaschine nach der im Oberbegriff des Anspruches 1 angegebenen Art.

Derartige Fräsmaschinen sind in unterschiedlichen Ausführungsformen bekannt und werden zum Abfräsen von Oberflächenbelägen, insbesondere Asphalt, verwendet. Eine Fräswalze ist dabei in einem Gehäuse der Fräsmaschine höhenverstellbar gelagert. Entsprechend dem Oberflächenabtrag wird die Fräswalze in ihrer Höhe verstellt und über die abzutragende Schicht verfahren. Dafür ist eine Zug- und/oder Schubmaschine vorgesehen, die über ein Anschlußteil mit der Fräsmaschine verbunden ist. Um Oberflächenschwankungen leicht ausgleichen zu können, ist eine Gelenkanordnung mit einem ersten Gelenk bei dem Anschlußteil angeordnet, das eine Drehbewegung der Fräsmaschine relativ zu ihrem Anschlußteil um eine im wesentlichen horizontal ausgerichtete und zu ihrer Längsachse parallele Achse ermöglicht. Zum Verfahren über die abzutragende Schicht ist die Fräsmaschine auf Rollen gelagert.

Die bekannten Fräsmaschinen haben jedoch den Nachteil, daß Richtungsänderungen während des Fräsens nur in einem sehr eingeschränkten Umfang möglich sind. Dadurch ist es vielfach notwendig, daß, beispielsweise im Bereich von Kanaldeckeln einer zu bearbeitenden Asphaltstraße, die um eine vorbestimmte Schicht abgetragen werden soll, von Hand nachgearbeitet bzw. von Hand in diesem Bereich abgetragen werden muß, da die bekannte Fräsmaschine mit der Zug- und/oder Schubmaschine den Kanaldeckel nur in einem sehr großen Bogen passieren kann.

Der Erfindung liegt die Aufgabe zugrunde, eine Fräsmaschine gemäß der im Oberbegriff des Anspruches 1 angegebenen Art derart weiterzubilden, daß zum einen die Lenkbarkeit der Fräsmaschine verbessert wird und zum anderen insbesondere die Möglichkeiten des Anordnens der Zug- oder Schubmaschine relativ zur Fräsmaschine für das Fräsen vergrößert und verbessert werden.

Diese Aufgabe wird durch die kennzeichnenden Merkmale des Anspruches 1 in Verbindung mit den Oberbegriffsmerkmalen gelöst. Nunmehr ist es ohne weiteres möglich, die Fräsmaschine in kleineren Radien um Hindernisse, wie Kanaldeckel oder ähnliches, zu steuern, wodurch die Bearbeitung beim Abfräsen von Oberflächenbelägen erheblich erleichtert wird. Dies bringt neben der sich dadurch ergebenden Zeitersparnis beim Abfräsen von Oberflächenbelägen auch eine enorme Kostenreduzierung mit sich.

Gemäß einer bevorzugten Ausführungsform bildet ein Bagger mit einem um eine vertikale Achse drehbaren Gehäuse und einem um zumindest eine horizontale Achse schwenkbaren Ausleger das Zug- und/oder Schubfahrzeug. Der Ausleger ist dabei mit seinem freien Ende an das Anschlußteil der Fräsmaschine angelenkt. Nunmehr ist es möglich, daß der Bagger versetzt zur Bearbeitungsrichtung der Fräsmaschine diese bewegen kann, wodurch sich der Einblick für die Bedienperson des Baggers auf die noch zu bearbeitende Fläche vor der Fräsmaschine erheblich verbessert. Hindernisse, Kanaldeckel oder dgl. können somit rechtzeitig erkannt und durch die erhöhte Steuerbarkeit der Fräsmaschine über das vertikale Gelenk präzise um dieses Hindernis oder dgl. gesteuert werden.

Damit herkömmliche Bagger, die insbesondere mit einem an dem Ausleger angelenkten Werkzeugstiel versehen sind, mit der Fräsmaschine verbunden werden können, um diese zu schieben bzw. zu ziehen, ist das Anschlußteil für die Aufnahme eines Werkzeugstiels und/oder eines Auslegers eines Baggers ausgebildet. Gemäß einer bevorzugten Ausführungsform der Erfindung ist das Anschlußteil der Fräsmaschine zum Anschluß einer Schwenkkinematik eines Baggers für einen Tieflöffel ausgebildet, insbesondere bildet dabei eine Schnellwechselplatte als Teil eines Schnellwechselsystems das Anschlußteil.

Die vorbestimmte Steuerung der Fräsmaschine wird vor allem auch dadurch erleichtert, daß ein Antriebsmechanismus vorgesehen ist, der die Drehbewegung um die vertikale Achse des zweiten Gelenks bewirkt. Dabei ist es günstig, wenn der Antriebsmechanismus hydraulisch ausgebildet ist und einen Anschluß für ein Hydrauliksystem der Zug- und/oder Schubmaschine aufweist.

Gemäß einer weiteren Ausführungsform der Erfindung sind mehrere erste und zweite Gelenke vorgesehen, wodurch die Steuerbarkeit der Fräsmaschine gegenüber der Zug- und/oder Schubmaschine weiter erhöht wird.

Zusätzliche vorteilhafte Merkmale bilden die Gegenstände der anderen Unteransprüche.

Vorteile und weitere Merkmale ergeben sich aber auch aus der folgenden Beschreibung einer Ausführungsform im Zusammenhang mit der Zeichnung. Es zeigen:
- Figur 1: eine schematische Seitenansicht einer Fräsmaschine gemäß einer Ausführungsform der Erfindung mit einem Bagger;
- Figur 2: eine Teilschnittansicht eines Ausschnittes beim Anschlußteil der Fräsmaschine von Fig. 1; und
- Figur 3: eine Schnittansicht entlang der Linie III-III von Fig. 2.

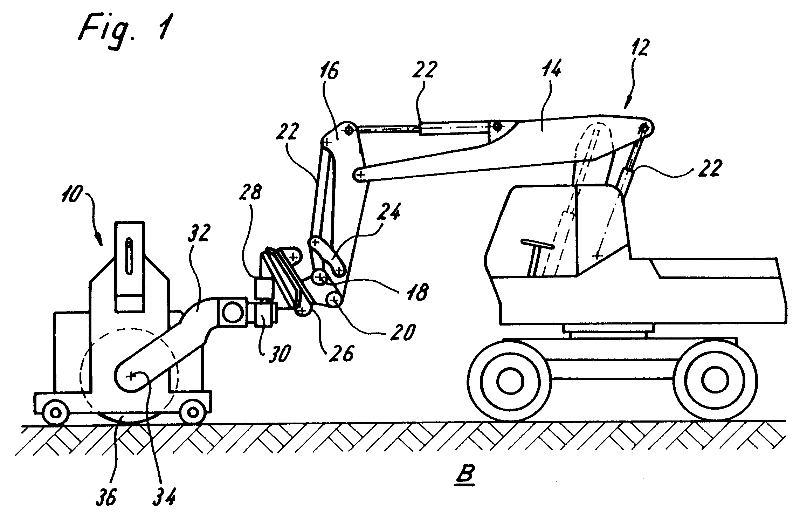

Fig. 1 zeigt eine Seitenansicht einer Fräsmaschine 10 mit einem an die Fräsmaschine 10 angeschlossenen Bagger 12. Der Bagger 12 ist mit einem Ausleger 14 und mit einem an den Ausleger 14 angelenkten Werkzeugstiel 16 versehen. Der Werkzeugstiel 16 weist an seinem freien Ende zwei Anlenkpunkte 18 und 20 auf. In bekannter Weise ist der Ausleger 14 mit dem Werkzeugstiel 16 und den Anlenkpunkten 18 und 20 mit einer Kinematik zum Bewegen eines hier nicht dargestellten Tieflöffels versehen. Dieser Antriebsmechanismus besteht aus mehreren Kolben/Zylinder-Anordnungen 22 sowie einem Schwenkhebel 24 und ist herkömmlicher Art, so daß darauf hier nicht näher eingegangen wird.

Die Anlenkpunkte 18 und 20 des Baggers 12 sind mit aus anderen Einsatzbereichen, beispielsweise im Zusammenwirken mit einem Tieflöffel bekannten Schnellwechselplatte 26 als Teil eines Schnellwechselsystems verbunden. Die Schnellwechselplatte 26 bildet das Anschlußteil der Fräsmaschine 10, das mit einem weiteren Teil Werkzeugstiel 16 am Bagger 12 des Schnellwechselsystems für den Bagger 12 verbunden ist. Über dieses Schnellwechselsystem kann der Bagger 12 einfach, d.h. binnen Sekunden mit der Fräsmaschine 10 verbunden und davon wieder gelöst werden. Die Schnellwechselplatte 26 ist, wie oben erwähnt, herkömmlicher Bauart und wird deshalb nicht im einzelnen erläutert.

Die Schnellwechselplatte 26 ist über zwei Gelenke 28 und 30 mit einer Schwinge 32 der Fräsmaschine 10 verbunden. Die Schwinge 32 ist U-förmig ausgebildet und umgreift das Gehäuse der Fräsmaschine 10. An den freien Enden der beiden Schenkel der Schwinge 32 ist eine Welle 34 einer Fräswalze 36 gelagert. Über die Schwinge 22 ist die Fräswalze 36 in vorbestimmter Weise relativ zur Oberfläche des um einen vorbestimmten Betrag abzufräsenden Bodens B höhenverstellbar.

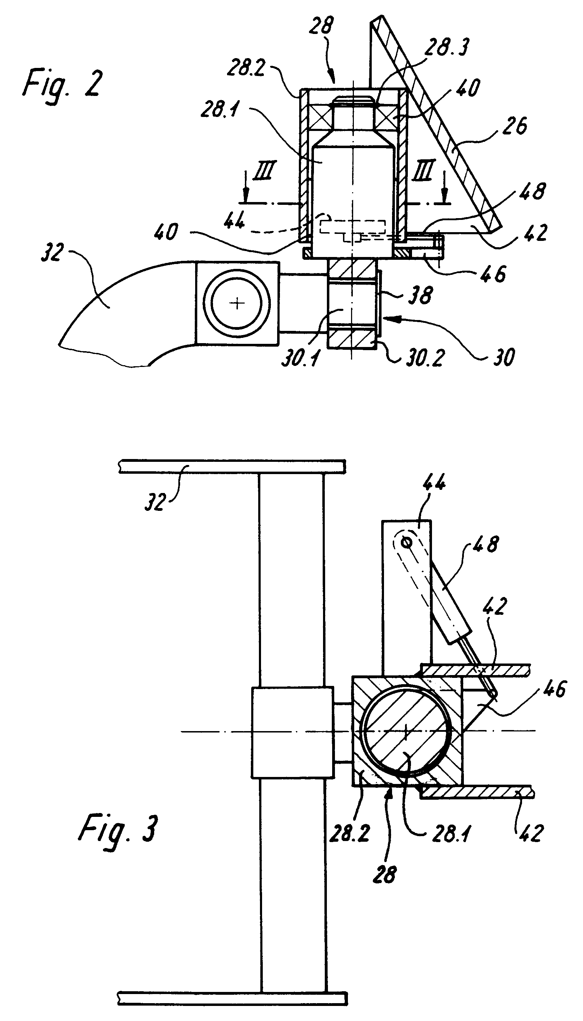

Die beiden Gelenke 28 und 30 sind deutlich den Fig. 2 und 3 zu entnehmen, wobei das erste Gelenk 30 ein Verschwenken der Schwinge 32 um eine horizontale, zur Längsachse der Fräsmaschine 10 parallele Achse relativ zur Schnellwechselplatte 26 ermöglicht. Durch das zweite Gelenk 28 ist die Schwinge 32 um eine im wesentlichen vertikale Achse relativ zur Schnellwechselplatte 26 verschwenkbar.

Beide Gelenke 28 und 30 sind vom Prinzip her gleich aufgebaut und bestehen aus einem Lagerzapfen 28.1 und 30.1 sowie einer Lagerbuchse 28.2 und 30.2.

Der Lagerzapfen 30.1 des ersten Gelenks 30 ist mittig mit der querverlaufenden Strebe der in der Draufsicht U-förmigen Schwinge 32 verbunden und greift in die Lagerbuchse 30.2 ein. Über einen auf das freie Ende des Lagerzapfens 30.1 angeordneten Sicherungsring 38 ist der Lagerzapfen 30.1 gegen ein Herausgleiten aus der Lagerbuchse 30.2 gesichert. Der Lagerzapfen 30.1 ist in der Lagerbuchse 30.2 über ein Gleitlager gelagert.

Die Lagerbuchse 30.2 des ersten Gelenks 30 ist mit dem Lagerzapfen 28.1 einstückig ausgebildet. Der Lagerzapfen 28.1 ist drehsymmetrisch in bezug auf seine Längsachse ausgebildet und mit einem einen geringeren Durchmesser aufweisenden Lageransatz 28.3 versehen. Sowohl an den Lageransatz 28.3 als auch an den gegenüber dem Lageransatz 28.3 einen größeren Durchmesser aufweisenden Teil des Lagerzapfens 28.1 greift ein Gelenklager 40 an, über die der Lagerzapfen 28.1 in der Lagerbuchse 28.2 drehbar gelagert ist.

Die Lagerbuchse 28.2 ist im Querschnitt rechteckig ausgeführt und weist eine entsprechend an den Lagerzapfen 28.1 angepaßte Bohrung auf, in die der Lagerzapfen 28.1 eingreift. An die Lagerbuchse 28.2 sind zwei Stützplatten 42 angeschweißt. Über die Stützplatten 42, die jeweils an einer Seite der Lagerbuchse 28.2 angeordnet sind, ist die Schnellwechselplatte 26 mit der Lagerbuchse 28.2 fest verbunden.

In Fig. 2 ist lediglich die untere Hälfte der Schnellwechselplatte 26 dargestellt. Die obere Hälfte, die der Fig. 1 zu entnehmen ist, ist auf die untere Hälfte aufgeschweißt.

An die Lagerbuchse 28.2 greift desweiteren eine in bezug auf die Fig. 3 nach oben verlaufende Strebe 44 an, die mit der Lagerbuchse 28.2 ebenfalls verschweißt ist. An dem in bezug auf Fig. 2 unteren Teil des Lagerzapfens 28.2 ist drehfest ein Schwenkhebel 46 angebracht. Der drehfest mit dem Lagerzapfen 28.1 verbundene Schwenkhebel 46 und die mit der Lagerbuchse 28.2 fest verbundene Strebe 44 sind über eine hydraulisch betriebene Kolben/Zylinder-Anordnung 48 miteinander verbunden. Die hydraulisch betriebene Kolben/Zylinder-Anordnung 48 wird über ein hier nicht dargestellten Anschluß von dem Hydrauliksystem des Baggers 12 gespeist. Die Kolben/Zylinder-Anordnung 48 wird vom Bagger 12 gesteuert, wodurch ein Antriebsmechanismus geschaffen ist, der ein Verschwenken der Fräsmaschine 10 gegenüber der Schnellwechselplatte 26 bzw. ihrer Lagerbuchse 28.2 um eine im wesentlichen vertikale Achse bewirkt, wenn der Kolben in dem Zylinder der Kolben/Zylinder-Anordnung 48 entsprechend ein- bzw. ausgefahren wird. Der Kolben der Kolben/Zylinder-Anordnung 48 ist mit seinem freien Ende an dem Schwenkhebel 46 angelenkt, wohingegen der Zylinder mit seinem freien Ende an das freie Ende der Strebe 44 angelenkt ist.

Durch die Fräsmaschine 10 mit ihren beiden Gelenken 28 und 30 und den durch die Kolben/Zylinder-Anordnung gebildeten Antriebsmechanismus 48 kann die Fräsmaschine 10 durch den Bagger 12 exakt über den Boden B gesteuert werden. Dabei ist es sogar möglich, daß der Bagger 12 in bezug auf die Abtragsrichtung der Fräsmaschine 10 versetzt angeordnet ist, wodurch der Fahrer des Baggers 12 einen besseren Einblick auf den Bereich vor der Fräsmaschine 10 erhält. Dabei wird die Fräsmaschine 10 von dem Bagger 12 gezogen oder geschoben.

Die Erfindung zeichnet sich somit vor allem dadurch aus, daß die erfindungsgemäße Fräsmaschine 10 nunmehr präzise gesteuert werden kann und durch weitere Zug- und/oder Schubfahrzeuge, wie beispielsweise dem Bagger 12, in unterschiedlichen Stellungen des Baggers 12 relativ zur Fräsmaschine 10 angetrieben werden kann, ohne daß konstruktive Änderungen am Bagger 12 vorgenommen werden müßten. Vielmehr kann der Bagger 12 über seine herkömmliche Tieflöffelkinematik in die Schnellwechselplatte 26 der Fräsmaschine 10 eingreifen und dadurch auf einfache Weise in nur kurzer Zeit mit der Fräsmaschine 10 verbunden werden und die Fräsmaschine 10 in vorbestimmter Weise gesteuert werden.

Gemäß einer weiteren, hier nicht dargestellten Ausführungsform der Erfindung sind zwei Anschlußteile bei der Fräsmaschine 10 vorgesehen. Ein Anschlußteil 26 ist dabei in der beschriebenen Art und Weise mit dem Werkzeugstiel 16 des Baggers 12 verbunden. Ein weiteres Anschlußteil ist beispielsweise mit dem Unterteil des Baggers 12 verbunden. Dies hat den Vorteil, daß die Antriebskräfte des Baggers 12 nicht mehr lediglich über das mit dem Werkzeugstiel 16 verbundene Anschlußteil 26 auf die Fräsmaschine 10 übertragen werden, sondern auch über das weitere Anschlußteil.

Das weitere Anschlußteil wirkt für Ausgleichsbewegungen der Fräsmaschine 10 gegenüber ihrem weiteren Anschlußteil mit einer weiteren Gelenkanordnung zusammen. Diese weitere Gelenkanordnung weist drei Gelenke auf. Das erste Gelenk ermöglicht eine Drehbewegung der Fräsmaschine 10 relativ zu ihrem weiteren Anschlußteil um eine im wesentlichen horizontal und parallel zur Längsachse der Fräsmaschine ausgerichtete Achse, das zweite Gelenk eine Drehbewegung senkrecht zu dieser, ebenfalls um eine im wesentlichen horizontal ausgerichtete Achse und das dritte Gelenk eine Drehbewegung im wesentlichen um eine vertikal ausgerichtete Achse.

Zudem ist die Fräsmaschine 10 über das weitere Anschlußteil so gelagert, daß eine translatorische Bewegung in horizontaler Richtung in Bezug auf die Stellfläche der Fräsmaschine ermöglicht wird.

Grundsätzlich wird durch die getrennte Ausführung der Fräsmaschine und der Antriebsmaschine die Einsatzbereitschaft erhöht. Fällt beispielsweise die Fräsmaschine 10 aus, so kann der Bagger 12 durch Abkuppeln von der Fräsmaschine 10 mit einer weiteren Fräsmaschine oder einem weiteren Werkzeug verbunden werden und ist somit weiterhin betriebsbereit. Entsprechendes gilt, wenn der Bagger 12 ausfällt. In diesem Fall kann die Fräsmaschine 10 an einen weiteren Bagger gekoppelt werden und ist weiterhin einsetzbar.

Durch diese auch getriebemäßige Entkoppelung und Bewegungsmöglichkeiten der Fräsmaschine 10 relativ zum Bagger 12 kann die Fräsmaschine 10 leichter gesteuert und engere Radien als auch komplexere Kurven fahren, so daß sich ihr Einsatzgebiet in vorteilhafter Weise erweitert.

### Bezugszeichenliste:

- 10: Fräsmaschine
- 12: Bagger
- 14: Ausleger
- 16: Werkzeugstiel
- 18: Anlenkpunkt
- 20: Anlenkpunkt
- 22: Kolben/Zylinder-Anordnung
- 24: Schwenkhebel
- 26: Schnellwechselplatte
- 28: zweites Gelenk
- 28.1: Lagerzapfen
- 28.2: Lagerbuchse
- 28.3: Lageransatz
- 30: erstes Gelenk
- 30.1: Lagerzapfen
- 30.2: Lagerbuchse
- 32: Schwinge
- 34: Welle für Fräswalze
- 36: Fräswalze
- 38: Sicherungsring
- 40: Gelenklager
- 42: Stützplatte
- 44: Strebe
- 46: Schwenkhebel
- 48: hydraulisch betriebene Kolben/Zylinder-Anordnung

## Patentansprüche

1. Fräsmaschine (10), die zum Abfräsen von Oberflächenbelägen, insbesondere Asphalt, durch eine Zug- und/oder Schubmaschine (12) über den abzufräsenden Oberflächenbelag (B) verfahren wird, mit einem Anschlußteil (26) für die Zug- und/oder Schubmadschine (12), einer Gelenkanordnung mit einem ersten Gelenk (30), das eine Drehbewegung derFräsmaschine (10) relativ zu ihrem Anschlußteil (26) um eine im wesentlichen horizontal ausgerichtete und zu ihrer Längsachse parallele Achse ermöglicht, **dadurch gekennzeichnet**, daß die Gelenkanordnung ein zweites Gelenk (28) aufweist, das eine Drehbewegung der Fräsmaschine (10) relativ zu ihrem Anschlußteil (26) im wesentlichen um eine vertikale Achse ermöglicht.

2. Fräsmaschine nach Anspruch 1, **dadurch gekennzeichnet**, daß ein Bagger (12) mit einem um eine vertikale Achse drehbaren Gehäuse und einem um zumindest eine horizontale Achse schwenkbaren Ausleger (14, 16) das Zug- und/oder Schubfahrzeug bildet.

3. Fräsmaschine nach Anspruch 1 oder 2, **dadurch gekennzeichnet**, daß das Anschlußteil (26) für die Aufnahme eines Werkzeugstiels (16) und/oder eines Auslegers (14) eines Baggers (12) ausgebildet ist.

4. Fräsmaschine nach Anspruch 2 oder 3, **dadurch gekennzeichnet**, daß das Anschlußteil (26) zum Anschluß an eine Schwenkkinematik eines Baggers (12) für einen Tieflöffel ausgebildet ist.

5. Fräsmaschine nach einem der vorangehenden Ansprüche, **dadurch gekennzeichnet**, daß das Anschlußteil durch eine Schnellwechselplatte (26) als Teil eines Schnellwechselsystems gebildet ist.

6. Fräsmaschine nach Anspruch 5, **dadurch gekennzeichnet**, daß das zweite Gelenk (28) durch eine Lagerbuchse (28.2) und einen in die Lagerbuchse (28.2) eingreifenden Lagerzap-fen (28.1) gebildet ist.

7. Fräsmaschine nach einem der vorangehenden Ansprüche, **dadurch gekennzeichnet**, daß ein Antriebsmechanismus (48) vorgesehen ist, der eine Drehbewegung um die vertikale Achse des zweiten Gelenks (28) bewirkt.

8. Fräsmaschine nach Anspruch 8, **dadurch gekennzeichnet**, daß der Antriebsmechanismus (48) hydraulisch betrieben ist.

9. Fräsmaschine nach Anspruch 8, **dadurch gekennzeichnet**, daß der hydraulische Antriebsmechanismus (48) einen An-schluß für ein Hydrauliksystem der Zug- und/oder Schubma-schine (12) aufweist.

10. Fräsmaschine nach einem der vorangehenden Ansprüche, **dadurch gekennzeichnet**, daß zumindest ein weiteres Anschlußteil für die Zug- und/oder Schubmaschine vorgesehen ist, das für Ausgleichsbewegungen der Fräsmaschine (10) gegenüber ihrem weiteren Anschlußteil mit einer weiteren Gelenkanordnung mit zumindest einem ersten Gelenk zusammenwirkt, das eine Drehbewegung der Fräsmaschine (10) relativ zu dem weiteren Anschlußteil um eine im wesentlichen horizontal ausgerichtete Achse ermöglicht.

11. Fräsmaschine nach Anspruch 10, **dadurch gekennzeichnet**, daß die Gelenkanordnung zumindest ein zweites Gelenk aufweist, das eine Drehbewegung der Fräsmaschine (10) relativ zu ihrem Anschlußteil im wesentlichen um eine vertikale Achse ermöglicht.

12. Fräsmaschine nach Anspruch 10 oder 11, **gekennzeichnet durch** eine Lagerung, die zumindest eine translatorische Ausgleichsbewegung der Fräsmaschine (10) gegenüber zumindest einem ihrer Anschlußteile (26) ermöglicht.
